# EUROPEAN PATENT APPLICATION

(11) **EP 1 760 932 A1**
(43) Date of publication of application: **07.03.2007**
(21) Application number: 05806963.4
(22) Date of filing: 08.11.2005
(51) Int. Cl.: H04L 12/14

(54) **A METHOD FOR PROCESSING THE ONLINE CHARGING**

(30) Priority: 08.11.2004 CN 200410090738
(71) Applicant: Huawei Technologies Co., Ltd., Longgang District, Shenzhen Guangdong 518129 (CN)
(72) Inventor: DUAN, Xiaoqin, Huawei Administration Build., Shenzhen, Guangdong 518129 (CN)
(74) Representative: Thun, Clemens
(86) International application number: PCT/CN2005/001874
(87) International publication number: WO 2006/047965

(57) **Abstract**

A method for processing online charging, according to an embodiment, includes: providing, by an Online Charging System (OCS), a credit limit and a monitoring condition to a Traffic Plane Function (TPF); requesting, by the TPF, the OCS to re-authorize a user if the credit limit has been used up or the monitoring condition has been reached. The method implements the charging based on the combination of volume and time, so that the OCS may monitor the use of network resources within a time period.

## Description

### Field of the Invention

The present invention relates to the field of packet data charging. In certain specific embodiments, the invention provides a method for processing online charging.

### Background of the Invention

Along with the wide application of packet data services, accurate and appropriate charging for packet data services has become a common concern of operators.

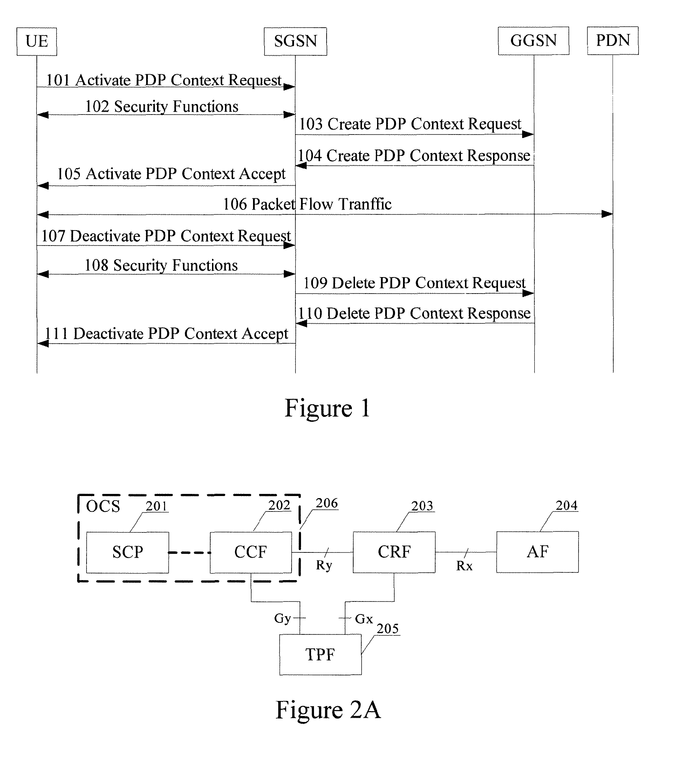

Figure 1 is a simplified flowchart illustrating the conventional activation, data transmission and deactivation of a Packet Data Protocol Context (PDP Context). The activation, data transmission with an external Packet Data Network (PDN) and the deactivation of the PDP Context in a General Packet Radio Service (GPRS) shown in Figure 1 includes the steps below.

Step 101: a User Equipment (UE) sends an Activate PDP Context Request to a Serving GPRS Support Node (SGSN). The Activate PDP Context Request contains a Network Layer Service Access Point Identifier (NSAPI), a PDP type, an Access Point Name (APN), a Quality of Service (QoS) parameter, a Transaction Identifier (TI), etc. The NSAPI serves as part of a Tunnel End Point Identifier (TEID) between the SGSN and a Gateway GPRS Support Node (GGSN) to identify the PDP Context. The PDP type may be a Peer-Peer Protocol (PPP) type, an Internet Protocol (IP) type, etc. The APN may be provided by the UE to the SGSN, the SGSN addresses a corresponding GGSN according to the APN, the GGSN determines an external network to be accessed by the UE according to the APN, and the SGSN may also select a default APN according to subscription information of the UE user if the UE does not provide an APN to the SGSN. The QoS parameter means a quality requirement that a packet data service designated by the UE is supposed to meet. The TI is used for identifying a PDP Context by the UE.

Step 102: the SGSN performs a security check and encryption with the UE after receiving the Activate PDP Context Request. This step is optional.

Step 103: the SGSN determines address information of the GGSN according to the APN. If the SGSN successfully determines the address information of the GGSN according to the APN, it creates, for the PDP Context, a TEID which may be a combination of an International Mobile Subscriber Identity (IMSI) and the NSAPI, and sends to the GGSN a Create PDP Context Request containing the PDP type, a PDP address, the APN, the QoS parameter, the TEID, a selection pattern, etc. The PDP address is an optional parameter, which may be an IP address of the UE, and may be not contained in the Create PDP Context Request. In this case, the UE may be assigned an IP address by the GGSN, or by the PDN which will establish a connection with the UE ultimately during subsequent processes. The selection pattern means a selection pattern of the APN, namely, the APN is selected by the UE or by the SGSN. If the SGSN fails to determine the address information of the GGSN according to the APN, it will refuse the Create PDP Context Request sent from the UE.

Step 104: the GGSN determines an external PDN according to the APN, assigns a Charging ID, and initiates charging and negotiates QoS after receiving the Create PDP Context Request. If the GGSN is able to meet the service quality requirement defined by the QoS parameter, the GGSN will return to the SGSN a Create PDP Context Response containing the TEID, the PDP address, a Backbone Bearer protocol, a negotiated QoS parameter, the Charging ID, etc. If the GGSN is unable to meet the service quality requirement defined by the QoS parameter, the GGSN will refuse the Create PDP Context Request sent from the SGSN, and the SGSN will refuse the Activate PDP Context Request sent from the UE.

Step 105: after receiving the Create PDP Context Response, the SGSN inserts an NSAPI for identifying the PDP Context and the address information of the GGSN into the PDP Context, selects a priority according to the negotiated QoS parameter, and returns to the UE an Activate PDP Context Accept containing the PDP type, the PDP address, the TI, the negotiated QoS parameter, the priority, PDP configuration options, etc. After that, the SGSN initiates charging. A direct route between the UE and the GGSN has been created as long as the UE receives the Activate PDP Context Accept, and the UE may transmit packet data.

Step 106: a packet data interaction between the UE and the PDN is performed through the SGSN and the GGSN.

Step 107: the UE sends a Deactivate PDP Context Request containing the TI, to the SGSN after the packet data interaction.

Step 108: the SGSN performs a security check and encryption with the UE after receiving the Deactivate PDP Context Request. This step is optional.

Steps 109 to 111: the SGSN sends a Delete PDP Context Request containing the TEID to the GGSN. The GGSN terminates charging the UE, deletes the PDP Context corresponding to the TEID, and sends a Delete PDP Context Response containing the TEID, to the SGSN after receiving the Delete PDP Context Request. After receiving the Delete PDP Context Response, the SGSN terminates charging the UE, deletes the PDP Context corresponding to the TEID, and sends a Deactivate PDP Context Response, containing the TI, to the UE. The UE deletes the PDP Context corresponding to the TI after receiving the Deactivate PDP Context Response.

As can be seen from the implementation shown in Figure 1, in the conventional GPRS charging system, the charging is performed only according to the data volume transmitted through the PDP Context or the time period of the PDP Context in an activated state because the charging start and the charging end is set respectively at the activation and the deletion of the PDP Context. However, in practical applications, the UE may carry out multiple services through one activated PDP Context after a data interaction between the UE and the PDN, that is, if the PDN may provide multiple services, such as an Email receiving/sending service, a Web service based on Wireless Application Protocol (WAP), a file transmission service based on File Transfer Protocol (FTP), etc., those services may be carried through one activated PDP Context once a transmission channel between the UE and the PDN is established. However, operators may adopt different charging modes for different services, for example, the email receiving/sending service may be charged according to the number of triggered email receiving/sending events, the Web service based on WAP may be charged according to data volume, and file transmission service may be also charged according to data volume, yet with a different charging rate from that of the Web service based on WAP. In this way, the conventional GPRS charging system is unable to perform differentiated charging for different services carried in one PDP Context.

In view of the above, the third Generation Partnership Project (3GPP) is discussing how to implement Flow Based Charging (FBC). When a UE user uses a packet data service, all IP flows or IP packets received and sent by the UE user are called a Service Data Flow, namely, the Service Data Flow is an aggregation set of multiple IP flows. Thus, the FBC is able to truly reflect the amount of resources occupied by a service data flow. The FBC may be deem as that IP flows of different services carried in one PDP Context are filtered out by some sieve-like filters, and the IP flows filtered out by different filters are charged separately to perform differentiated charging for different service data flows. In this way, the charging granularity of the FBC is far less than that of one PDP Context based charging, the granularity may be considered as a size of sieve hole. The charging granularity of one PDP Context based charging means that a PDP Context is one sieve hole, while the charging granularity of the FBC means that an IP service data flow is one sieve hole, namely, one PDP Context includes multiple sieve holes. Compared with the PDP Context based charging, the FBC may provide more charging modes for operators and service providers.

System structures, function requirements and information interaction processes of the FBC are described in 3GPP, and a structure of an FBC system supporting conventional online charging is shown in Figure 2A. Customized Application for Mobile Network Enhanced Logic (CAMEL) based Service Control Point (SCP) 201 and Service Data Flow bas ed Credit Control Function (CCF) 202 constitute an Online Charging System (OCS) 206. CCF 202 interacts, through an Ry interface, with Service Data Flow based Charging Rule Function (CRF) 203, CRF 203 interacts with Application Function (AF) 204 through an Rx interface and with Traffic Plane Function (TPF) 205 through a Gx interface respectively, and CCF 202 interacts with TPF 205 through a Gy interface.

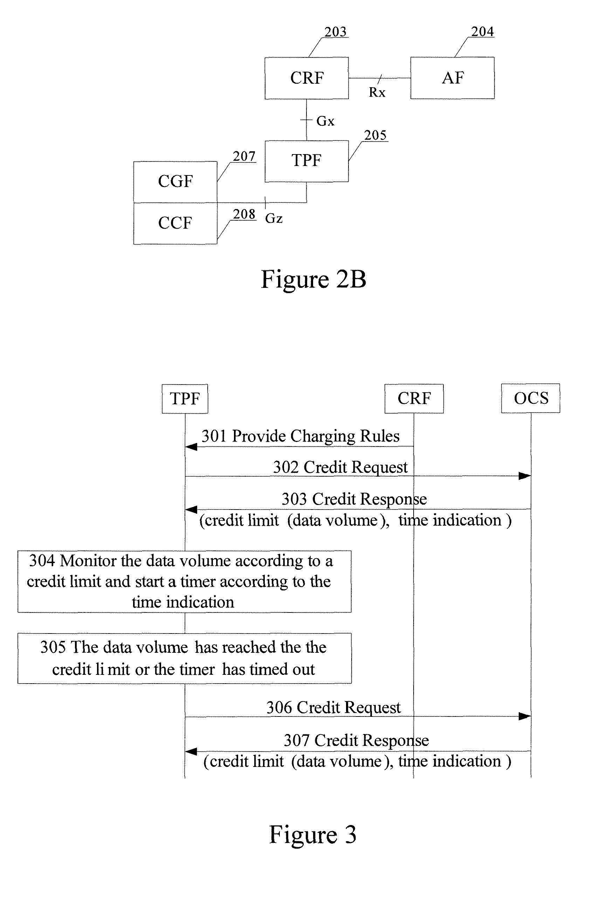

A structure of the FBC system supporting conventional offline charging is shown in Figure 2B. CRF 203 interacts with AF 204 through an Rx interface and with TPF 205 through a Gx interface respectively, and TPF 205 interacts with Charging Gateway Function (CGF) 207 and Charging Collection Function (CCF) 208 respectively through a Gz interface.

TPF 205 carries IP flows. When an IP flow bearer is established, TPF 205 sends a charging rule request to CRF 203 through the Gx interface, the charging rule request containing user and UE related information, bearer characteristics and network related information. The user and UE related information may be a Mobile Station International Integrated Services Digital Network (MSISDN), an International Mobile Subscriber Identifier (IMSI), etc., and the network related information may be a Mobile Network Code (MNC), a Mobile Country Code (MCC), etc. Furthermore, during a transmission of IP flow, the bearer may be modified, for example, QoS parameters may be negotiated again. If QoS parameters of the same service used by a user are different, charging rules are different, e.g., if a QoS parameter decreases, the corresponding charging rate decreases correspondingly. In this case, TPF 205 may send a Charging Rule Request to CRF 203 again to request a new charging rule when the bearer is modified. CRF 203 selects an appropriate charging rule according to the above input information provided by TPF 205, and returns the charging rule to TPF 205. The charging rule includes a charging mechanism, a charging type, a Charging Key, a service data flow filter, a charging rule priority, etc. The charging mechanism may be an online charging or an offline charging. The charging type may be a type of time-based charging or a type of flow-based charging. The Charging Key is a parameter related to charging rate, and CRF 203 may provide parameters related to charging rate to TPF 205 instead of a charging rate. The service data flow filter is used for indicating IP flows that need to be filtered by TPF205, and then TPF205 charges for the IP flows filtered out according to the charging rule. The service data flow filter may include IP5 tuple including a source/destination IP addresses, a source/destination Port Number, and a Protocol ID, etc. For example, CRF 203 instructs TPF 205 to filter IP flows sent from the source address 10.0.0.1 to the destination address 10.0.0.2 through the source/destination port No.20 based on the Transfer Control Protocol (TCP), and to charge for the IP flows filtered out according to the charging rule.

CRF 203 may provide a Trigger event to TPF 205, so as to ask TPF 205 to request a new charging rule from CRF 203 when a specified event takes place, for example, CRF 203 may ask TPF 205 to request a new charging rule from CRF 203 when a bearer is modified. The Trigger event may be regarded as an event relating to charging rule. At present, a charging mode of the CRF controlling the TPF by a Trigger event reporting mechanism is described in 3GPP specifications, i.e., after detecting that a Trigger event has taken place, the TPF reports to the CRF the Trigger event, the CRF gets that the bearer has changed according to the Trigger event reported by the TPF, determines a corresponding charging rule and delivers the charging rule to the TPF. The Trigger event defined in 3GPP specifications may include: a Public Land Mobile Network (PLMN) change event, a QoS change event, a Radio Access Technique (RAT) type change event and a Transmission Flow Template (TFT) change event.

CRF 203 may selects an appropriate charging rule according to input information from AF 204 or OCS 206, besides according to the input information provided by TPF 205, e.g., AF 204 informs CRF 203 of a service type used currently by the user, and CRF 203 selects a corresponding charging rule according to the service type.

OCS 206 is an online charging system including SCP 201 and CCF 202. CCF 202 is a function entity for credit management, and is only applied in the online charging system, and the functions thereof may be realized by adding new functions to OCS 206 of the related art. During an online charging, CCF 202 manages and controls user credits. When the user uses services, CCF 202 authenticates credits in the user credit pool and delivers, through the Gy interface, to TPF 205 credits which the user may use.

In addition, upon the occurrence of a Re-authorization trigger event, OCS 206 may ask TPF 205 to report the event, re-authorize the user according to the corresponding Re-authorization trigger event reported by TPF 205, and may compute the user credit over again. For example, after a user credit provided by OCS 206 to TPF 205 has been used up, TPF 205 needs to report to OCS 206 the occurrence of a user credit expiry event according to a credit authorization lifetime expiry event of the Re-authorization trigger event. OCS 206 computes a user credit allowed to be used b y the user over again according to information of the residual user account. For another example, during the charging based on different location, OCS 206 determines a charging rule according to a location where the user is located currently and computes a user credit according to the charging rate. When the user moves to another location, e.g., if there is a change of the PLMN, TPF 205 needs to report the occurrence of a PLMN change event according to the PLMN change event of the Re-authorization trigger event. OCS 206 determines a charging rate over again according to the updated location where the user is located currently, and computes a user credit over again. For another example, OCS 206 determines a charging rate according to QoS parameters of a service used currently by the user. When the user changes the QoS parameters, TPF 205 needs to report the occurrence of a bearer modified event to OCS 206 according to the bearer modified event of the Re-authorization trigger event. OCS 206 determines a charging rate according to the QoS parameters modified by the user, and computes a user credit over again.

In addition, it is described in 3GPP specifications that an OCS manages the credit use of the TPF through a Re-authorization trigger event reporting mechanism, i.e., the TPF reports a Re-authorization trigger event to the OCS after detecting the occurrence of the Re-authorization trigger event. The OCS gets the use of the user credit and the change of the bearer through the Re-authorization trigger event reported by the TPF, computes a user credit over again, and delivers it to the TPF. A Re-authorization trigger event defined in 3GPP specifications includes: a credit authorization lifetime expiry event, an idle timeout event, a charging rule change event, a PLMN change event, a QoS parameter change event and a RAT type change event.

In a GPRS network, TPF 205 is a GGSN, AF 204 is a service gateway or a service server in the PDN, and CRF 203 is a logic entity added newly. TPF 205 is an execution point of charging rule, and CRF 203 is a control point of charging rule.

For a packet data flow based charging, 3GPP specifications provide volume-based charging, time-based charging, and charging based on the combination of volume and time. The volume-based charging mode takes the data volume transmitted as charging basis; the time-based charging mode takes the time period of transmitting data as charging basis; the charging mode based on the combination of volume and time takes the data volume transmitted within a time period as charging basis.

At present, the online charging provided in 3GPP specifications may include the charging based on the combination of volume and time without a specific implementation thereof, which makes the charging processing based on the combination of volume and time unclear, which has a negative impact on the usability and clarity of the charging mode based on the combination of volume and time.

### Summary of the Invention

The embodiments of the present invention provide a method for processing online charging, which clarifies a charging mode based on the combination of volume and time so that an OCS may better manage the network resources used by users.

According to an embodiment, the present invention provides a method for processing online charging. The mothed includes:
providing, by an Online Charging System (OCS), a credit limit and a monitoring condition to a Traffic Plane Function (TPF);
requesting, by the TPF, the OCS to re-authorize a user if the credit limit has been used up or the monitoring condition has been reached.

The method further includes:
computing, by the OCS, the credit limit based on data volume according to an account of the user before providing the credit limit and the monitoring condition to the TPF;
wherein the monitoring condition is a time indication.

The method further includes:
returning, by the TPF, to the OCS at least one of: a residual credit limit based on data volume and residual time, and requesting the OCS to provide a new credit limit based on data volume after requesting the OCS to re-authorize the user.

The method further includes:
computing, by the OCS, the credit limit based on time according to an account of the user before providing the credit limit and the monitoring condition to the TPF;
wherein the monitoring condition is volume credit.

The method further includes:
returning, by the TPF, to the OCS at least one of: a residual credit limit based on time and residual data volume, and requesting the OCS to provide a new credit limit based on time after requesting the OCS to re-authorize the user.

The method further includes:
before providing the credit limit and the monitoring condition to the TPF,
   providing, by a Service Data Flow based Charging Rule Function (CRF), the TPF with the volume credit and the time indication;
   providing, by the TPF, the OCS with the volume credit and the time indication.
Said providing the TPF with the volume credit and the time indication further includes:
   providing, by the CRF, the TPF with a charging mode indication for charging based on the combination of volume and time;
said providing the OCS with the volume credit and the time indication further includes:
   providing, by the TPF, the OCS with the charging mode indication for charging based on the combination of volume and time.

The credit limit includes one part of a credit limit according to an account of the user.

The method further includes:
providing, by the OCS, the TPF with a credit limit and a monitoring condition after requesting by the TPF the OCS to re-authorize the user, and re-performing said process of requesting the OCS to re-authorize the user if the credit limit has been used up or the monitoring condition has been reached.

The method further includes:
before providing the TPF with the credit limit and the monitoring condition,
   computing, by the OCS, a new credit limit based on data volume according to at least one of: the residual credit limit based on data volume and the residual time; or
   computing, by the OCS, a new credit limit based on time according to at least one of: the residual credit limit based on time and the residual data volume.

The method further includes:
after the TPF requests the OCS to re-authorize the user,
   determining, by the OCS, a reason of the TPF requesting the OCS to re-authorize the user;
   determining, by the OCS, whether data volume used by the user is less than a data volume minimum set by the OCS if the reason is that a timer of the time indication times out;
   terminating, by the OCS, the session with the TPF if the data volume is less than the data volume minimum;
   providing, by the OCS, the TPF with a time indication and a new credit limit based on data volume and re-performing said process of requesting the OCS to re-authorize the user if the data volume is not less than the data volume minimum.

Said terminating the session with the TPF includes:
sending, by the OCS, to the TPF a terminating operation indication;
releasing, by the TPF, a session of the service data volume corresponding to the interaction between the OCS and the TPF.

It is to be appreciated that embodiments of the present invention provide various advantages over conventional techniques. According to certain embodiments, during an online charging, the OCS provides the TPF with a credit limit and a monitoring condition simultaneously; as detecting that the credit limit has been used up or the monitoring condition has been reached, the TPF requests the OCS to re-authorize the user, and returns information of a residual credit limit or a residual monitoring condition. Through an interaction between the TPF and the OCS, the OCS may get the information of the residual monitoring condition when the credit limit provided to the TPF has been used up or the information of the residual credit limit when the monitoring condition has been reached, which may implement the charging based on the combination of volume and time, so that the OCS may monitor the use of network resources within a time period.

### Brief Description of the Drawings

Figure 1 is a simplified flowchart illustrating the conventional activation, data transmission and deactivation of a PDP Context.
Figure 2A shows simplified architecture of an FBC system supporting conventional online charging.
Figure 2B shows simplified architecture of an FBC system supporting conventional offline charging.
Figure 3 is a simplified schematic diagram illustrating a processing process of a charging mode based on the combination of volume and time in accordance with an embodiment of the present invention.
Figure 4 is a simplified schematic diagram illustrating a processing process of a charging mode based on the combination of volume and time in accordance with another embodiment of the present invention.

### Detailed Description of the Invention

The present invention is hereinafter described in detail with reference to the accompanying drawings and embodiments.

In the online charging of the embodiments of the present invention, an OCS provides a TPF with a credit limit based data volume and a time indication simultaneously. The TPF monitors the data volume according to the credit limit and starts a timer according to the time indication. When the credit limit has been used up or the timer has timed out, the TPF requests the OCS to re-authorize the user, and returns a residual credit limit. Through an interaction between the TPF and the OCS, the OCS may get the time used when the credit limit delivered to the TPF has been used up or the credit limit used when the timer has timed out, which may implement the charging based on the combination of volume and time so that the OCS may monitor the use of network resources within a time period.

In addition, in the online charging of the embodiments of the present invention, the OCS may also provide the TPF with a credit limit based on time and volume credit simultaneously; the TPF monitors the time according to the credit limit; as the credit limit has been used up or the data volume has reach the volume credit, the TPF requests the OCS to re-authorize the user, and returns a residual credit limit. Through the interaction between the TPF and the OCS, the OCS may get residual data volume when the credit limit delivered to the TPF has been used up or residual credit limit when the data volume has reached the volume credit, thereby the charging based on the combination of volume and time may be implemented.

Figure 3 is a simplified schematic diagram illustrating a processing process of a charging mode based on the combination of volume and time in accordance with an embodiment of this invention, in which a credit limit is computed by a volume-based method. As shown in Figure 3, when the credit limit is computed by the volume-based method, the processing process of the charging mode based on the combination of volume and time includes the following steps.

Step 301: when a CRF provids a TPF with charging rules, the CRF indicates that the current charging mechanism is an online charging and provides the TPF with a charging mode indication for charging based on the combination of volume and time. In an example, the CRF may further provide the TPF with a time indication and volume credit which need to be monitored, and the volume credit may be a data volume minimum or a data volume maximum. For example, the time indication provided by the CRF to the TPF may be one hour and the dara volume minimum is 1M bytes, which indicates that the user needs to use at least the data volume of 1M bytes per hour in this charging mode. If the data volume used is less than 1M bytes, charging for the data volume by 1M bytes; if the data volume used is more than 1M bytes, charging for the data volume by the actual used. In addition, the CRF may also provide the TPF with a charging key for indicating charging rate information, for example, RMB two yuan per M bytes.

Step 302: after receiving the charging rules provided by the CRF, the TPF sends a Credit Request to the OCS according to the charging mode of online charging and requests the OCS to provide a user credit limit. Merely by way of example, the Credit Request contains input information for determining the user credit limit by the OCS, for example a charging mode based on the combination of volume and time, a time indication, volume credit and a charging key and etc.

Merely by way of example, the charging mode, the time indication and the volume credit in Step 301 and Step 302 may be combined in the charging key and provided by a charging key parameter or by one or more new defined parameters.

Step 303: after receiving the Credit Request, the OCS computes a credit limit based on data volume that may be used by the user according to a user account and the charging rate information indicated by the charging key. For example, if the user account allows using the data volume of 100M bytes, the OCS returns the TPF with a Credit Response, which contains the credit limit based on data volume and the time indication. At this point, in order to avoid one assignment of too much user credit for one service, which may limit the user to use other services, the OCS may provide the TPF with one part of the available credit, for example, provide a credit limit of 10M bytes each time.

Steps 304 to 306: after receiving the Credit Response, the TPF monitors the data volume according to the credit limit based on data volume provided by the OCS and starts a timer according to the time indication. When detecting that the data volume has reached the credit limit or the timer has timed out, the TPF sends to the OCS a Credit Request containing a residual credit limit based data volume or a residual time, requests the OCS to provide a new credit limit. In an example, the Credit Request may further contain a reason for triggering the Credit Request, so that the OCS may get clearly that the reason for triggering the Credit Request is that the data volume has reached the credit limit or the timer has timed out.

Step 307: after receiving the Credit Request, the OCS determines the reason for triggering the Credit Request. Merely by way of example, if the reason is that the data volume has reached the credit limit, the OCS computes a new credit limit based on data volume according to the user account information and the charging rate information indicated by the charging key, then returns to the TPF a Credit Response containing the new credit limit based on data volume and a time indication. If the reason is that the timer has timed out, the OCS charges the user fees according to the charging mode based on the combination of volume and time and the charging rate information indicated by the charging key. For example, the data volume used by the user is less than 1M bytes within one hour, charging for the data volume by 1M bytes, and the charging rate is RMB two yuan per M bytes, i.e., the user expends two yuan within one hour, then the OCS computes a new credit limit based on data volume according to the residual user account and the charging rate information indicated by the charging key, and returns to the TPF a Credit Response containing the new credit limit based on data volume and the time indication.

The subsequent processes repeat the Steps 304 to 307 until the user terminates the use of the corresponding service or all credit of the user account have been used up.

In addition, in the other charging not based on data volume or time, the OCS may better manage the network resources used by the user through the above charging mode based on the combination of volume and time.

In certain embodiements, the OCS may provide the TPF with the time indication actively when providing a credit limit based on data volume, and the TPF monitors the data volume according to the credit limit and starts a timer according to the time indication. When the TPF sends to the OCS a new Credit Request and the OCS determines that the reason for triggering the Credit Request is that the timer times out, the OCS may further determines the data volume used by the user within the time indication. If the data volume used by the user is of a very small amount, for example the data volume is less than a data volume minimum set by the OCS, it may be deducted that the user seldom uses the service recently or the user does not use the service any more, i.e., there may be something abnormal, so when the user stops using a service, the resources of the user side has been released, but the resources of the network side has not been released and is still in an occupation state. Thus, in order to avoid the meaningless occupation and suspension of network resources, the OCS may actively initiate a process to terminate the current interaction with the TPF, i.e., the OCS sends to the TPF a terminating operation indication and requests the TPF to release the corresponding interaction with the OCS. Thus the TPF releases the session of the service data volume corresponding to the current interaction between the OCS and the TPF.

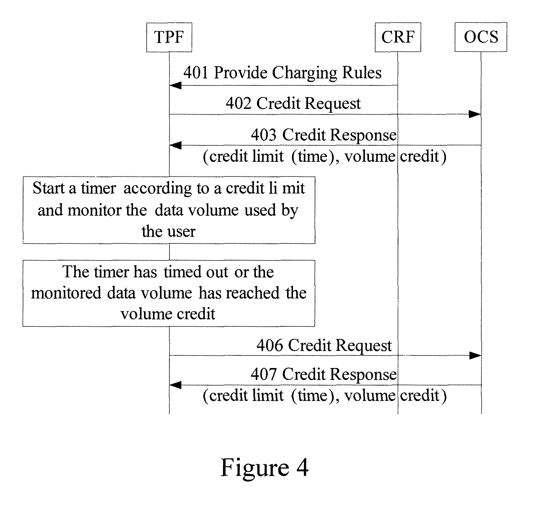

In addition, the embodiments of this invention provides a schematic diagram illustrating a processing process of computing a credit limit by the time-based method under a charging mode based on the combination of volume and time in accordance with another embodiment, in which a credit limit is computed by the time-based method. As shown in Figure 4, when a credit limit is computed by the time-based method, a processing process of the charging mode based on the combination of volume and time includes the following steps.

Step 401: when the CRF provids the TPF with charging rules, the CRF indicates that the current charging mode is online charging and provides the TPF with a charging mode indication for charging based on the combination of volume and time. In an example, the CRF may further provide the TPF with volume credit and a time indication which need to be monitored, and the time indication may be a time indication minimum or a time indication maximum. For example, the volume credit provided by the CRF to the TPF may be 10M bytes and the time indication minimum is one hour, which means that in this charging mode the user may use at most the data volume of 10M bytes per hour. If the time of using the data volume of more than 10M bytes is less than one hour, charging by one hour; if the time of using the data volume of 10M bytes is more than one hour, charge for the actual data volume. In this way, it is avoided that the user uses up vast network resources to cause charging loss of operators when operators takes the time as the computing basis of the credit limit. In addition, the CRF provides the TPF with a charging key for indicating charging rate information, for example, RMB two yuan per hour.

Step 402: after receiving the charging rules provided by the CRF, the TPF sends a Credit Request to the OCS according to the charging mode of online charging and requests the OCS to provide a user credit limit. Merely by way of example, the Credit Request contains input information for determining the user credit limit by the OCS, for example, a charging mode based on the combination of volume and time, a time indication, volume credit and a charging key.

Merely by way of example, the charging mode, the time indication and the volume credit in Step 401 and Step 402 may be combined in the charging key and provided by a charging key parameter or by one or more new defined parameters.

Step 403: after receiving the Credit Request, the OCS computes a credit limit based on time that may be used by the user according to a user account and the charging rate information indicated by the charging key. For example, if the user account allows using the service of ten hours, the OCS returns the TPF with a Credit Response containing the credit limit based on time and the volume credit. In addition, in order to avoid one assignment of too much credit for one service, which may limit the user to use other services, the OCS may provide the TPF with part of the available credit, for example, provide a credit limit of one hour each time.

Steps 404 to 406: after receiving the Credit Response, the TPF starts a timer according to the credit limit based on time provided by the OCS, and monitors the data volume used by the user. As detecting that the timer has timed out or the data volume has reached the volume credit, the TPF sends to the OCS a Credit Request containing a residual credit limit based on time or a residual data volume, requests the OCS to provide a new credit limit. In an example, the Credit Request may further contain a reason for triggering the Credit Request, so that the OCS may get clearly that the reason for triggering the Credit Request is that the time has reached the credit limit or the monitored data volume has reached the volume credit.

Step 407: after receiving the Credit Request, the OCS determines the reason for triggering the Credit Request. Merely by way of example, if the reason is that the time has reached the credit limit, the OCS computes a new credit limit based on time according to the user account information and the charging rate information indicated by the charging key, and then returns to the TPF a Credit Response containing the new credit limit based on time and the volume credit. If the reason is that the monitored data volume has reached the volume credit, the OCS charges the user according to the charging mode based on the combination of volume and time and the charging rate information indicated by the charging key. For example, if the time of using the data volume of 10M bytes by the user is less than one hour, charging by one hour, and the charging rate is RMB two yuan per hour, i.e., the user expends two yuan within the time of less than one hour.

Merely by way of example, the OCS computes a new credit limit based on time according to the residual user account and the charging rate information indicated by the charging key, and returns to the TPF a Credit Response containing the new credit limit based on time and volume credit.

The subsequent processes repeat Steps 404 to 407 until the user terminates the use of the corresponding service or all credit of the user account has been used up.

It should be appreciated that the foregoing is only preferred embodiments of the present invention and is not for use in limiting the invention. Any modification, equivalent substitution, and improvement without departing from the spirit and principle of this invention should be covered in the protection scope of the invention.

## Claims

1. A method for processing online charging, comprising:
providing, by an Online Charging System (OCS), a credit limit and a monitoring condition to a Traffic Plane Function (TPF);
requesting, by the TPF, the OCS to re-authorize a user if the credit limit has been used up or the monitoring condition has been reached.

2. The method of Claim 1, further comprising:
computing, by the OCS, the credit limit based on data volume according to an account of the user before providing the credit limit and the monitoring condition to the TPF;
wherein the monitoring condition is a time indication.

3. The method of Claim 2, further comprising:
returning, by the TPF, to the OCS at least one of: a residual credit limit based on data volume and residual time, and requesting the OCS to provide a new credit limit based on data volume after requesting the OCS to re-authorize the user.

4. The method of Claim 1, further comprising:
computing, by the OCS, the credit limit based on time according to an account of the user before providing the credit limit and the monitoring condition to the TPF;
wherein the monitoring condition is volume credit.

5. The method of Claim 4, further comprising:
returning, by the TPF, to the OCS at least one of: a residual credit limit based on time and residual data volume, and requesting the OCS to provide a new credit limit based on time after requesting the OCS to re-authorize the user.

6. The method of Claim 1, 2 or 4, further comprising:
before providing the credit limit and the monitoring condition to the TPF,
providing, by a Service Data Flow based Charging Rule Function (CRF), the TPF with the volume credit and the time indication;
providing, by the TPF, the OCS with the volume credit and the time indication.

7. The method of Claim 6, wherein
said providing the TPF with the volume credit and the time indication further comprises:
providing, by the CRF, the TPF with a charging mode indication for charging based on the combination of volume and time;
said providing the OCS with the volume credit and the time indication further comprises:
providing, by the TPF, the OCS with the charging mode indication for charging based on the combination of volume and time.

8. The method of Claim 1, wherein the credit limit comprises one part of a credit limit according to an account of the user.

9. The method of any of Claims 1 to 5 or claim 8, further comprising:
providing, by the OCS, the TPF with a credit limit and a monitoring condition after requesting by the TPF the OCS to re-authorize the user, and re-performing said process of requesting the OCS to re-authorize the user if the credit limit has been used up or the monitoring condition has been reached.

10. The method of Claim 9, further comprising:
before providing the TPF with the credit limit and the monitoring condition,
computing, by the OCS, a new credit limit based on data volume according to at least one of: the residual credit limit based on data volume and the residual time; or
computing, by the OCS, a new credit limit based on time according to at least one of: the residual credit limit based on time and the residual data volume.

11. The method of Claim 3, further comprising:
after the TPF requests the OCS to re-authorize the user,
determining, by the OCS, a reason of the TPF requesting the OCS to re-authorize the user;
determining, by the OCS, whether data volume used by the user is less than a data volume minimum set by the OCS if the reason is that a timer of the time indication times out;
terminating, by the OCS, the session with the TPF if the data volume is less than the data volume minimum;
providing, by the OCS, the TPF with a time indication and a new credit limit based on data volume and re-performing said process of requesting the OCS to re-authorize the user if the data volume is not less than the data volume minimum.

12. The method of Claim 11, wherein said terminating the session with the TPF comprises:
sending, by the OCS, to the TPF a terminating operation indication;
releasing, by the TPF, a session of the service data volume corresponding to the interaction between the OCS and the TPF.
